# EUROPEAN PATENT SPECIFICATION

(11) **EP 3 718 709 B1**
(45) Date of publication and mention of the grant of the patent: **07.06.2023**
(21) Application number: 17933724.1
(22) Date of filing: 28.11.2017
(51) Int. Cl.: B25J 9/16, G05B 19/418

(54) **COMPONENT MOVING DEVICE**
VORRICHTUNG ZUM BEWEGEN VON BAUTEILEN
DISPOSITIF DE DÉPLACEMENT DE COMPOSANT

(43) Date of publication of application: 07.10.2020
(73) Proprietor: Fuji Corporation, Chiryu-shi, Aichi 472-8686 (JP)
(72) Inventor: OISHI, Nobuo, Chiryu-shi Aichi 472-8686 (JP)
(74) Representative: Grünecker Patent- und Rechtsanwälte PartG mbB
(86) International application number: PCT/JP2017/042626
(87) International publication number: WO 2019/106720

(56) References cited:
- JP-A- 2002 331 480
- JP-A- 2007 326 160
- JP-A- 2008 062 376
- JP-A- 2014 205 209
- JP-A- 2017 170 560
- US-A1- 2002 169 522
- US-A1- 2004 186 624
- US-A1- 2013 158 710
- US-A1- 2014 039 679
- US-A1- 2015 003 678

## Description

### Technical Field

The present disclosure relates to a component moving device including a component supply section for supplying multiple components in a scattered state.

### Background Art

Such component moving devices include a device configured to pick up multiple components scattered at a component supply section through operation of a component holding robot or the like. JP-H-10-202569 describes an example of such a component supply device. Further related background art is disclosed in US 2002/169522 A1 and US 2015/003678 A1.

### Summary of the Invention

### Technical Problem

The present invention is intended to move stably components from a component supply section.

### Solution to Problem

The present invention provides a component moving device including: a component supply section having a component supply surface where multiple components are placed in a scattered manner and a wall section configured to prevent the components from falling off the component supply surface; a holding tool configured to pinch and hold individually the components placed on the component supply surface with a pair of claw sections; a moving section configured to move the holding tool to a position above one of the components placed on the component supply surface and then move the holding tool from above the one of the components in an up-down direction; an imaging section configured to image the component supply section from above the component supply surface; a calculating section configured to calculate an angle at which a direction in which the pair of claw sections pinches a pinching target component, which is a pinching target component to be pinched by the pair of claw sections, and an inner wall surface of the wall section intersect based on an image imaged by the imaging section; a setting section configured to set a pinching acceptable area, in which the components placed on the component supply surface can be individually pinched by the pair of claw sections while the holding tool is avoiding an interference with the wall section, narrower as the angle calculated at the calculating section gets greater; a determining section configured to determine whether the pinching target component is a pinching acceptable component, which can be pinched by the pair of claw sections of the holding tool while the holding tool is avoiding an interference with the wall section, based on the pinching acceptable area set at the setting section and the image; and a control section configured to control operations of the holding tool and the moving section so that the holding tool pinches and holds the pinching target component which is determined to be the pinching acceptable component at the determining section.

### Advantageous Effect of the Invention

According to the disclosure, the component moving device can move a component stably from the component supply section.

### Brief Description of Drawings

[Fig.1] Fig.1 is a schematic diagram schematically showing a configuration of robot system 10.
[Fig.2] Fig.2 is a schematic diagram showing schematically a configuration of robot 20.
[Fig.3] Fig.3 is a block diagram showing an electrical connecting relationship among robot 20, robot control device 70, and image processing device 80.
[Fig.4] Fig.4 is an explanatory diagram illustrating search area AS for use in an image processing sequence.
[Fig.5] Fig.5 is an explanatory diagram illustrating interference check area AI and gripping center position PP for use in the image processing sequence.
[Fig.6] Fig.6 is an explanatory diagram showing an example of the image processing sequence.
[Fig.7] Fig.7 is an explanatory diagram showing captured image I when workpieces W1 to W8 are extracted within search area AS.
[Fig.8] Fig.8 shows explanatory diagrams illustrating gripping acceptable areas AA.
[Fig.9] Fig.9 is an explanatory diagram illustrating a process of determining whether a workpiece is a pinching acceptable component.

### Description of Embodiment

Next, a mode for carrying out the disclosure will be described by reference to drawings.

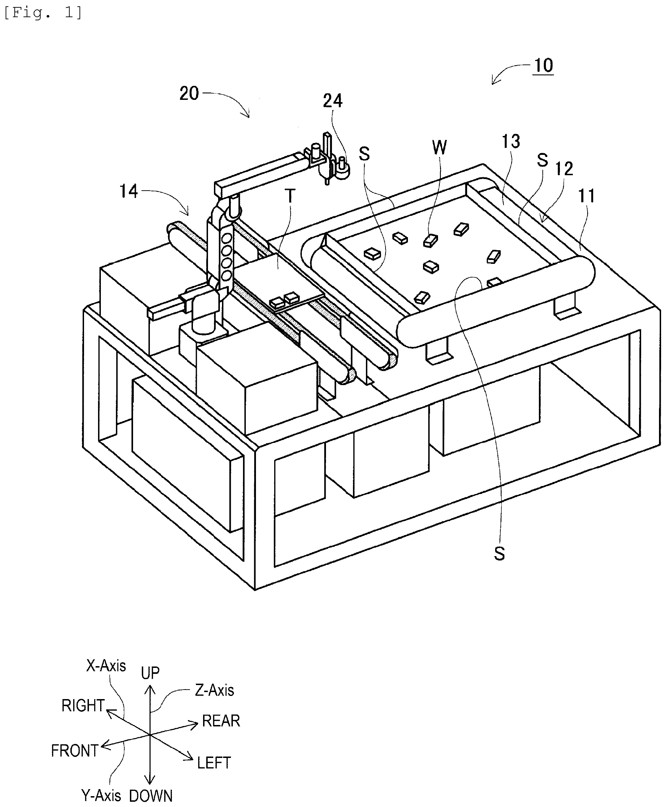

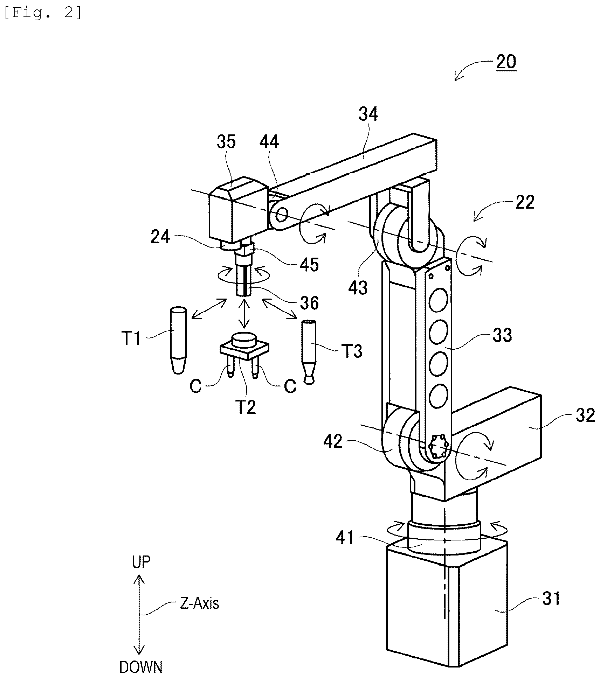

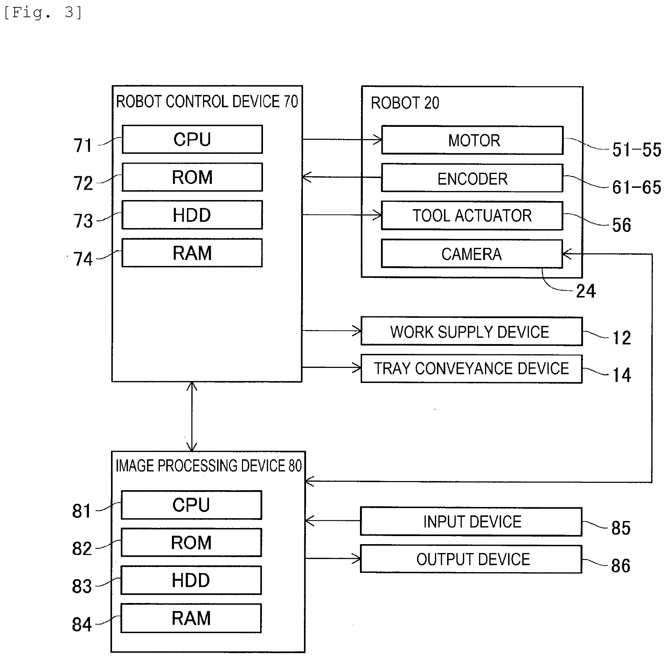

Fig.1 is a schematic diagram schematically showing a configuration of robot system 10. Fig.2 is a schematic diagram showing schematically a configuration of robot 20. Fig.3 is a block diagram showing an electrical connecting relationship among robot 20, robot control device 70, and image processing device 80. In Fig.1, a left-right direction denotes an X-axis direction, a front-rear direction denotes a Y-axis direction, and an up-down direction denotes a Z-axis direction.

Robot system 10 includes robot 20, robot control device 70, and image processing device 80. In an embodiment of the disclosure, robot system 10 is configured as a pick-and-place system in which workpieces W supplied by work supply device 12 are individually picked (gripped) up, and workpieces W so picked up are placed in alignment on tray T conveyed by tray conveyance device 14. The robot system can be applied not only to the pick-and-place system but also to any work system in which robot 20 is used to perform any work on workpieces W.

Robot 20 includes five-axis perpendicular articulated arm (hereinafter, referred to as an arm) 22. Arm 22 includes six links (first to sixth links 31 to 36) and five joints (first to fifth joints 41 to 45) which couple the links together in such a manner as to rotate or swivel. The joints (first to fifth joints 41 to 45) include motors (servo motors) 51 to 55 for driving the corresponding joints and encoders (rotary encoders) 61 to 65 for detecting rotational positions of the corresponding motors.

Multiple types of picking tools T1 to T3, which are end effectors, can be detachably attached to a tip link (sixth link 36) of arm 22. In this embodiment, picking tool T1 is an electromagnetic chuck, using an electromagnet, which is configured to pick up workpiece W made of a magnetic material. Picking tool T2 is a mechanical chuck (hereinafter, referred to as a mechanical chuck) having a pair of clamping claws C which is configured to move between a near position where workpiece W is pinched and a spaced-apart position where pinched workpiece W is released. Picking tool T3 is a suction nozzle for pick up workpiece W through vacuum or negative pressure. The picking tools that are attached to the tip link are selected as required in accordance with the shape or material of workpiece W to be picked up thereby.

Camera 24 is attached to a distal end portion (fifth link 35) of arm 22. Camera 24 is intended to image workpieces W on work supply device 12 for recognition of positions and postures of workpieces W which are supplied by work supply device 12 , and image tray T conveyed by tray conveyance device 14 for recognition of a position of tray T so conveyed.

A proximal link (first link 31) of arm 22 is fixed to work bench 11. Work supply device 12, tray conveyance device 14, and the like are disposed on work bench 11. In this embodiment, work supply device 12 is made up of a belt conveyor device including conveyor belt 13 laid to extend between a driving roller and a driven roller which are disposed apart from each other in the front-rear direction (the Y-axis direction). Multiple workpieces W are placed in bulk on conveyor belt 13, and work supply device 12 supplies multiple workpieces W on conveyor belt 13 from the rear to the front by driving rotationally the driving roller. Pair of wall sections S, S are provided along conveyor belt 13 at a left and right sides of conveyor belt 13. On the other hand, pair of wall sections S, S are provided on conveyor belt 13 at a front and rear sides thereof in a workpiece W supplying direction (the Y-axis direction) in such a manner as to span conveyor belt 13. Wall sections S are provided in such a state that they stand along the Z-axis direction (the up-down direction) so as to prevent workpieces W from falling off conveyor belt 13. Further, rear wall section S is supported rotatably by left and right wall sections S, S via shafts, not shown, at left end and right end upper portions thereof. As a result, rear wall section S can rotate to the front or the rear about an orthogonal direction (the X-axis direction) to the workpiece W supplying direction as a rotation center. Therefore, for example, when workpiece W supplied from the rear to the front comes into abutment with a lower portion of rear wall section S, rear wall portion S rotates to the front while being pushed by workpiece W so supplied, whereby rear wall section S allows workpiece W in question to pass thereunder, and when no workpiece W pushes rear wall section S, rear wall section S is allowed to rotate back to the rear by its own weight, whereby rear wall section S is allowed to stand again along the Z-axis direction (the up-down direction). The work supply device may be a case supply device for supplying a case (a component case) as a whole which accommodates therein multiple workpieces, instead of the belt conveyor device, or the case supply device and the belt conveyor device may be disposed side by side to constitute the work supply device. Tray conveyance device 14 is made up of a belt conveyor device and conveys tray T in an orthogonal direction (the X-axis direction) to the workpiece W supplying direction, positioning and holding tray T in a substantially central position thereof.

Robot control device 70 is configured as a microprocessor made up mainly of CPU 71 and includes, in addition to CPU 71, ROM 72 and HDD 73, RAM 74, an input and output interface, not shown, a communication interface, not shown, and the like. Detection signals are inputted into robot control device 70 from encoders 61 to 65, and the like. Then, robot control device 70 outputs control signals to work supply device 12 and tray conveyance device 14, motors 51 to 55, tool actuator 56, and the like. Tool actuator 56 is an actuator for driving the picking tools mounted on robot 20.

Robot control device 70 executes a picking process, in which robot 20 is caused to pick up workpiece W by causing motors 51 to 55 of robot 20 to be driven, and a placing process, in which robot 20 is caused to place workpiece W so picked on tray T. Specifically, the picking process will be executed as follows. That is, robot control device 70 acquires respective target positions of joints of arm 22 which are associated with a target picking position and posture of arm 22. Subsequently, robot control device 70 causes motors 51 to 55 to be driven so that the respective positions of the associated joints come to coincide with the target positions acquired therefor. Then, robot control device 70 causes tool actuator 56 to be activated so that workpiece W can be picked up by the picking tool. At this time, robot control device 70 moves the picking tool into an interference checking area for picking target workpiece W and thereafter causes motors 51 to 55 to be driven so that the picking tool is lowered along the Z-axis direction (the up-down direction) from a position directly above picking target workpiece W in question and is then raised back. Specifically, the placing process will be executed as follows. That is, robot control device 70 acquires respective target positions of the joints of arm 22 which are associated with a target placing position and posture of arm 22. Subsequently, robot control device 70 causes motors 51 to 55 to be driven so that the respective positions of the associated joints come to coincide with the target positions acquired therefor. Then, robot control device 70 causes tool actuator 56 to be activated so that workpiece W so picked up is placed (workpiece W so picked up is released) accordingly.

Image processing device 80 is configured as a microprocessor which is made up mainly of CPU 81 and includes, in addition to CPU 81, ROM 82 and HDD 83, RAM 84, an input and output interface, not shown, a communication interface, not shown, and the like. An image signal and an input signal are inputted into image processing device 80 from camera 24 and input device 85, respectively. Image processing device 80 outputs a drive signal and an output signal to camera 24 and output device 86, respectively. Here, input device 85 is an input device, such as a keyboard or a mouse, through which an operator performs an input operation. Output device 86 is a display device, such as a liquid crystal display, on which various pieces of information are displayed. Image processing device 80 is connected with robot control device 70 for communication, and control signals and data are exchanged between them.

Image processing device 80 transmits a control signal to robot control device 70, causing arm 22 (camera 24) to move to an imaging point for workpieces W supplied by work supply device 12 to image workpieces Won conveyor belt 13 by driving camera 24. As a result, an image signal (a captured image) so obtained is inputted into image processing device 80 from camera 24. Subsequently, image processing device 80 processes the inputted image signal and recognizes workpieces W in the captured image. Then, image processing device 80 extracts from recognized workpieces W a target workpiece which the picking tool can pick up while the picking tool is avoiding an interference with any or some of wall sections S of work supply device 12 and indexes a target position and a target posture for the picking tool which is to pick up the extracted target workpiece, sending the target position and the target posture so indexed to robot control device 70. This series of processes is executed in accordance with an image processing sequence based on image processing data (two-dimensional data).

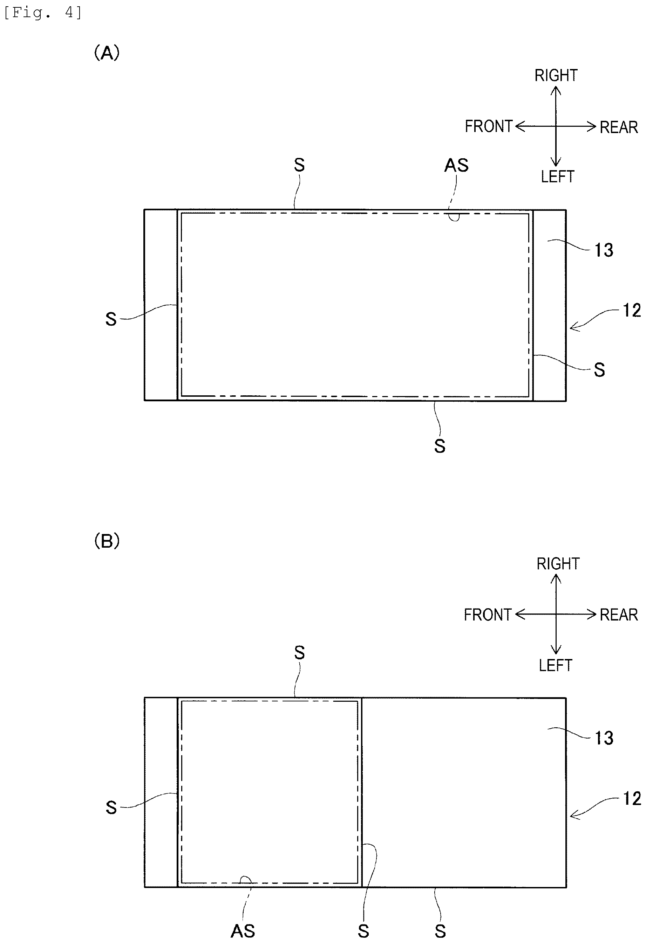

Fig.4 is an explanatory diagram showing a search area AS for use in the image processing sequence. Search area AS determines a search range for workpieces W in a captured image imaged or captured by camera 24. Specifically, as shown in Fig.4(A), search area AS is a range where workpieces W can be disposed on conveyor belt 13 of work supply device 12, that is, a range inside a rectangular frame surrounded by inner side edges of wall sections S of work supply device 12. Therefore, for example, in the case that rear wall section S of work supply device 12 is provided substantially at a center of conveyor belt 13 in the front-rear direction as shown in Fig.4(B), resulting search area AS becomes smaller than that shown in Fig.4(A). Search areas AS are stored in HDD 83 of image processing device 80 while being associated with rear wall section S of work supply device 12 to thereby be registered in robot system 10. The search areas are also registered in all the supply devices (for example, the case supply device described above, and the like) that can be installed on work bench 11.

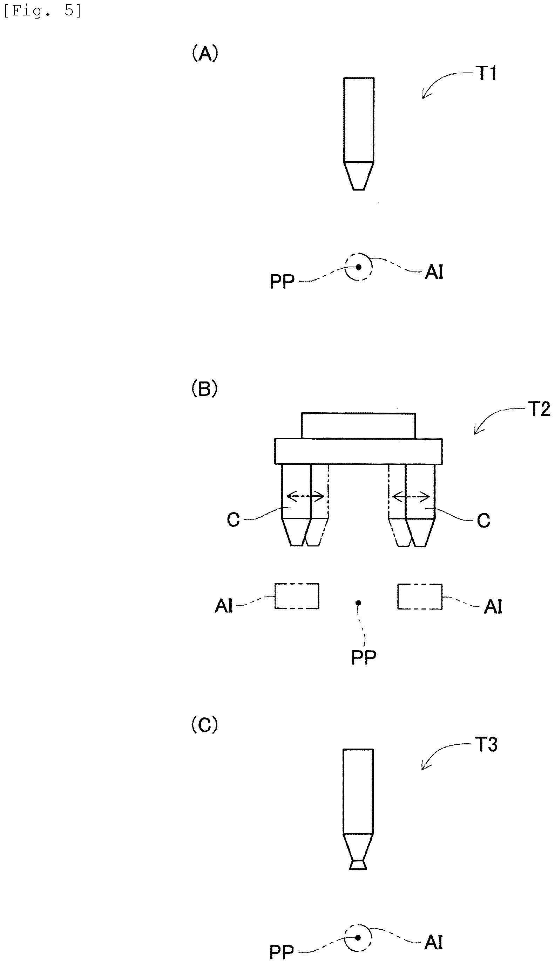

Fig.5 is an explanatory diagram showing interference checking area AI and a gripping center position PP which are used in the image processing sequence. Interference checking area AI is used when image processing device 80 checks an interference of the picking tool with (wall sections S of) work supply device 12. Specifically, in the case of picking tool T1 being an electromagnetic chuck, as shown in Fig.5(A), a circular shadow portion resulting from projecting the electromagnetic chuck, which is taking a picking posture, in the up-down direction constitutes interference checking area AI for picking tool T1. Further, a central point of interference checking area AI constitutes a gripping center position PP of picking tool T1. However, in the case that wall sections S of work supply device 12 are such as to be attracted by the electromagnetic chuck, interference checking area AI is expanded in consideration of a magnetic force of the electromagnetic chuck. In Fig.5(A), picking tool T1 is shown in a side view, and interference checking area AI is shown in a plan view. Figs.5(B) and (C) also show similar views to those in Fig.5(A).

In the case of picking tool T2 being a mechanical chuck, as shown in Fig.5(B), a pair of rectangular shadow portions resulting from projecting pair of clamping claws C, C, which are taking a picking posture, in the up-down direction constitutes pair of interference checking areas AI, AI for picking tool T2. However, pair of clamping claws C, C are each understood to reciprocate between a near position and a spaced-apart position. Thus, interference checking areas AI and AI for picking tool T2 denote movable ranges for pair of clamping claws C, C for picking. Further, a central point between interference checking areas AI, AI constitutes gripping center position PP of picking tool T2. In the case of picking tool T3 being a suction nozzle, as shown in Fig.5(C), a circular shadow portion resulting from projecting the suction nozzle, which is taking a picking posture, in the up-down direction constitutes interference checking area AI for picking tool T3. Further, a central point of interference checking area AI constitutes a gripping center position PP of picking tool T3.

Interference checking areas AI and gripping center positions PP shown in Figs.5(A), (B), and (C) are stored in HDD 83 of image processing device 80 while being associated with corresponding picking tools T1, T2, and T3 to thereby be registered in robot system 10. The interference checking areas are also registered in all other picking tools that can be detachably attached to the tip link (sixth link 36) of arm 22.

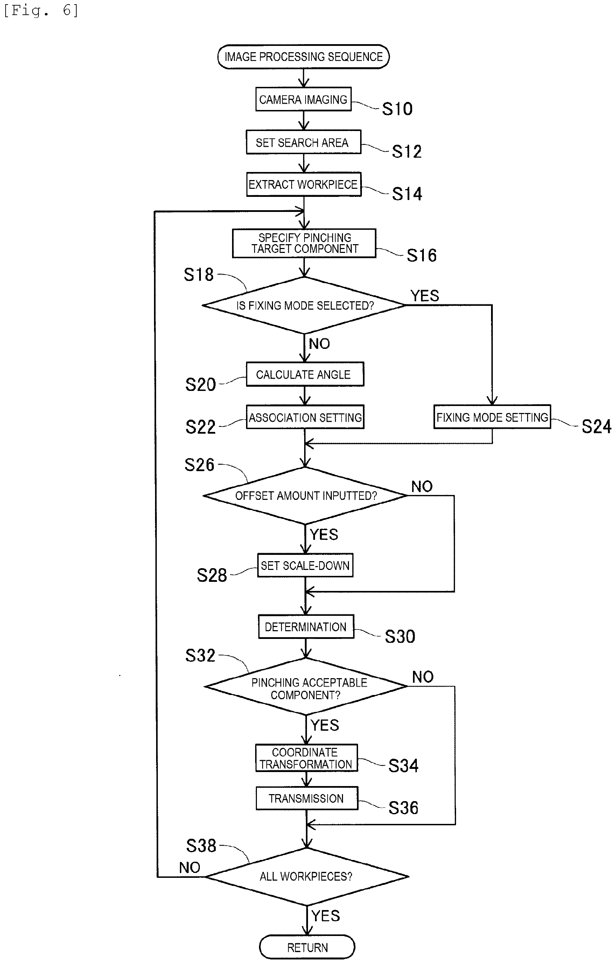

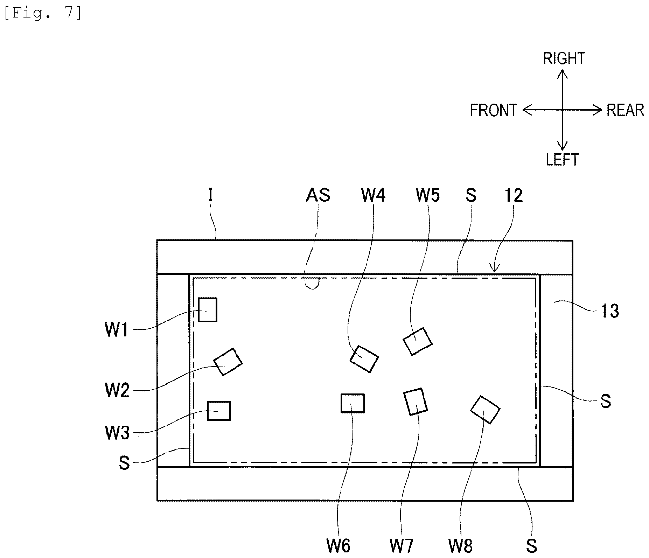

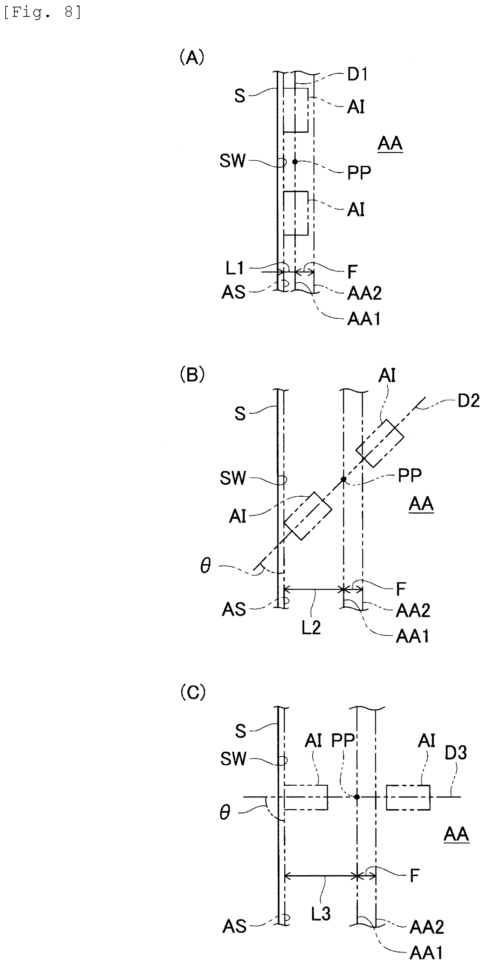

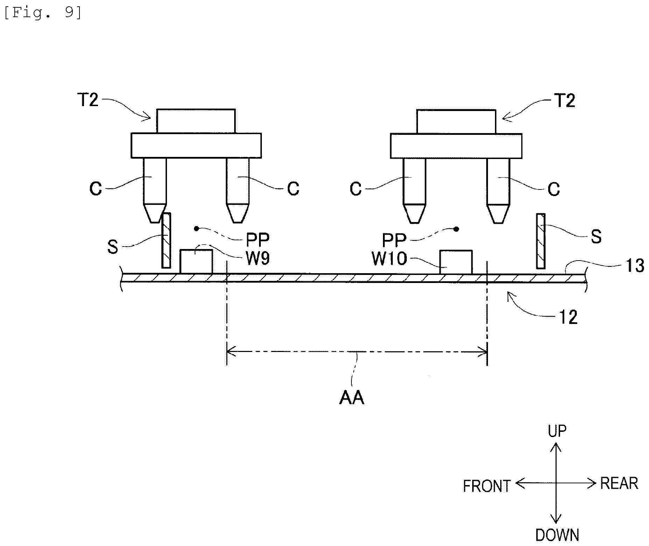

Fig.6 is an explanatory diagram showing an example of an image processing sequence. In the following description, Figs.7 to 9 will be referred to, in addition to Fig.6. Fig.7 is an explanatory diagram showing captured image I captured when workpieces W1 to W8 are extracted inside search area AS. Fig.8 shows explanatory diagrams illustrating gripping acceptable areas AA. Fig.9 is an explanatory diagram illustrating a process of determining whether a workpiece is a pinching acceptable component. In the following description, it is understood that in robot system 10, work supply device 12 shown in Fig.1 is set on work bench 11, and further, picking tool T2 (that is, the mechanical chuck) shown in Fig.2 is attached to robot 20. Further, it is also understood that information representing the mode described above is inputted into image processing device 80 as a result of the operator operating input device 85 accordingly.

In the image processing sequence, image processing device 80 images work supply device 12 using camera 24 from directly above conveyor belt 13 (S10). Following this, image processing device 80 sets search area AS on the captured image (S12). As this occurs, image processing device 80 reads out search area AS (that is, that shown in Fig.4(A)), which is stored in association with work supply device 12 shown in Fig.1, from HDD 83. Then, image processing device 80 extracts workpieces W existing inside search area AS in the captured image (S14). Specifically, for example, in captured image I shown in Fig.7, eight workpieces W1 to W8 are extracted within search area AS therein. Since the extracting technique is the known technique, a detailed description thereof will be omitted here.

Next, image processing device 80 specifies a picking candidate for picking tool T2 from the workpieces within search area AS in captured image I as a pinching target component (S16). Since the specifying technique is the known technique, a detailed description thereof will be omitted here. In the following description, in the case that workpiece W1 within captured image I shown in Fig.7 constitutes a pinching target component, workpiece W1 will be denoted as pinching target component W1. This also applies to a case in which another or other workpieces than workpiece W1 are described as pinching target components.

Next, image processing device 80 determines whether a fixing mode is selected (S18). When referred to herein, the fixing mode means a mode in which a gripping acceptable area, which will be described later, is fixed to a minimum level. Information on whether the fixing mode is selected is inputted into the image processing device 80 by the operator operating input device 85. If the fixing mode is not selected (S18: NO), image processing device 80 executes an angle calculation process (S20).

In executing this process, image processing device 80 specifies a direction suitable for clamping claws C, which is a part of picking tool T2 to pinch pinching target component W1 and hereinafter is referred to a pinching direction of pinching target component W1, in accordance with the outline (posture) of pinching target component W1 defined when pinching target component W1 is extracted as described above, and then calculates an angle at which the specified direction and inner wall surface SW of wall section S of work supply device 12 with each other (S20). At this time, image processing device 80 determines wall section S among wall sections S of work supply device 12 which lies nearest to pinching target component W1 as an angle calculating target. Specifically, as shown in Fig.8(A), pinching direction D1 of pinching target component W1 is parallel to inner wall surface SW of wall section S lying nearest to pinching target component W1. Therefore, an angle of zero degree is calculated.

Then, image processing device 80 sets a gripping acceptable area in association with the calculated angle (S22). The gripping acceptable area is a range where the picking tool can pick up workpiece W while the picking tool is avoiding an interference with each of wall sections S of work supply device 12. Specifically, image processing device 80 sets gripping acceptable area AA shown in Fig.8(A) for pinching target component W1. In Fig.8(A), long sides of interference checking areas AI, AI which are directed in pinching direction D1 of pinching target component W1 are inscribed in a boundary of search area AS which lies adjacent to wall section S situated nearest to pinching target component W1. Straight line AA1, which is parallel to the boundary of search area AS, passes over gripping center position PP between interference checking areas AI, AI (picking tool T2) which are in the state described above. An area expanding from straight line AA1 towards a center of search area AS constitutes gripping acceptable area AA. Therefore, in the case that the calculated angle is zero degree, a length from the boundary of search area AS to straight line AA1 (that is, gripping acceptable area AA) constitutes distance L1, which is constant. Then, image processing device 80 sets gripping acceptable area AA from the calculated angle (zero degree).

If workpiece W2 is specified as pinching target component in S16 described above, the processes in S20 and S22 described above will be performed as follows. Image processing device 80 specifies a direction suitable for clamping claws C, which is a part of picking tool T2 to pinch pinching target component W2 and is hereinafter referred to a pinching direction of pinching target component W2, in accordance with the outline (posture) of pinching target component W2 defined when pinching target component W2 is extracted as described above, and then calculates an angle at which the specified direction and inner wall surface SW of wall section S of work supply device 12 intersect with each other. At this time, image processing device 80 determines wall section S among wall sections S of work supply device 12 which lies nearest to pinching target component W2 as an angle calculating target. Specifically, as shown in Fig.8(B), pinching direction D2 of pinching target component W2 intersects inner wall surface SW of wall section S lying nearest to pinching target component W2 at 45 degrees. Therefore, an angle θ of 45 degrees is calculated.

Then, image processing apparatus 80 sets gripping acceptable area AA in association with calculated angle θ of 45 degrees. Specifically, image processing device 80 sets gripping acceptable area AA shown in Fig.8(B) for pinching target component W2. In Fig.8(B), of interference checking areas AI, AI which are directed in pinching direction D2 of pinching target component W2, a corner portion of interference checking area AI situated nearer to wall section S lying nearest to pinching target component W2 is inscribed in a boundary of search area AS which lies adjacent to nearest wall section S. Straight line AA1, which is parallel to the boundary of search area AS, passes over gripping center position PP between interference checking areas AI, AI (picking tool T2) which are in the state described above. An area expanding from straight line AA1 towards a center of search area AS constitutes gripping acceptable area AA. Therefore, in the case that calculated angle θ is 45 degrees, a length from the boundary of search area AS to straight line AA1 (that is, gripping acceptable area AA) is distance L2, which is constant. Then, image processing device 80 sets gripping acceptable area AA from calculated angle θ (45 degrees). Distance L2 is longer than distance L1.

In addition, if workpiece W3 is specified as pinching target component in S16 described above, the processes in S20 and S22 described above will be executed as follows. Image processing device 80 specifies a direction suitable for clamping claws C, which is a part of picking tool T2 to pinch pinching target component W3 and hereinafter, referred to a pinching direction of pinching target component W3, in accordance with the outline (posture) of pinching target component W3 defined when pinching target component W3 is extracted as described above, and then calculates an angle at which the specified direction and inner wall surface SW of wall section S of work supply device 12 intersect with each other. At this time, image processing device 80 determines wall section S among wall sections S of work supply device 12 which lies nearest to pinching target component W3 as an angle calculating target. Specifically, as shown in Fig.8(C), pinching direction D3 of pinching target component W3 intersects inner wall surface SW of wall section S lying nearest to pinching target component W2 at 90 degrees. Therefore, angle θ of 90 degrees is calculated.

Then, image processing device 80 sets gripping acceptable area AA in association with calculated angle θ of 90 degrees. Specifically, image processing device 80 sets gripping acceptable area AA shown in Fig.8(C) for pinching target component W3. In Fig.8(C), of interference checking areas AI, AI which are directed in pinching direction D3 of pinching target component W3, a short side of interference checking area AI situated nearer to wall section S lying nearest to pinching target component W3 is inscribed in a boundary of search area AS which lies adjacent to nearest wall section S. Straight line AA1, which is parallel to the boundary of search area AS, passes over gripping center position PP between interference checking areas AI, AI (picking tool T2) which are in the state described above. An area expanding from straight line AA1 towards a center of search area AS constitutes gripping acceptable area AA. Therefore, in the case that calculated angle θ is 90 degrees, a length from the boundary of search area AS to straight line AA1 (that is, gripping acceptable area AA) is distance L3, which is constant. Then, image processing device 80 sets gripping acceptable area AA from calculated angle θ (90 degrees). Distance L3 is longer than distance L2.

In this manner, image processing device 80 sets gripping acceptable area AA in association with angle θ calculated in S20. Angle θ calculated in S20 is calculated in a range from 0 degree to 90 degrees. Therefore, since the distance from the boundary of search area AS to straight line AA1 (that is, gripping acceptable area AA) becomes longer as angle θ calculated in S20 becomes greater, gripping acceptable area AA set in S22 becomes narrower.

On the other hand, if the fixing mode is selected (S18: YES), image processing device 80 executes a fixing magnitude calculation process (S24). In executing the fixing magnitude calculation process, image processing device 80 sets a predetermined pinching acceptable area. This pinching acceptable area is the same as one set in the case that calculated angle θ calculated in S20 is 90 degrees (refer to Fig.8(C)) and is a minimum area in all gripping acceptable areas AA that can be set in S22 above.

Next, image processing device 80 determines whether an offset amount is inputted (S26). When referred to herein, the offset amount means a distance from straight line AA1. Information on the offset amount is inputted into image processing device 80 by the operator operating input device 85 accordingly. If the offset amount is not inputted (S26: NO), image processing device 80 executes a process in S30, which will be described later. On the other hand, if the offset amount is inputted (S26: YES), image processing device 80 executes a scale-down magnitude setting process (S28).

In this scale-down magnitude setting process, image processing device 80 scales down gripping acceptable area AA in accordance with the offset amount. Specifically, for example, as shown in Figs. 8(A), (B), and (C), the setting state of gripping acceptable area AA is changed from a state in which gripping acceptable area AA is set in an area ranging from straight line AA1 to the center side of search area AS to a state in which gripping acceptable area AA is set in an area ranging from straight line AA2, which is parallel to straight line AA1, to the center side of search area AS. In this regard, straight line AA2 is situated in a position spaced apart from straight line AA1 towards the center side of search area AS by a distance constituting an offset amount F. Thus, gripping acceptable area AA set in S28 is narrower than gripping acceptable area AA set in S22 or S24 described above.

Subsequently, image processing device 80 executes the process in S30. In this process, image processing device 80 determines whether workpiece W specified as pinching target component in S16 above is a pinching acceptable component. The pinching acceptable component means a workpiece that picking tool T2 can pinch while picking tool T2 is avoiding an interference with any or some of wall sections S of work supply device 12. In making this determination, gripping center position PP of picking tool T2 when picking tool T2 pinches workpiece W and gripping acceptable area AA set in S22, S24 or S28 are used.

Specifically, for example, as shown in Fig.9, in the case that workpiece W9 is specified as a pinching target component (hereinafter, referred to as pinching target component W9), gripping center position PP of picking tool T2 when picking tool T2 pinches pinching target component W9 is situated outside gripping acceptable area AA. In this case, image processing device 80 determines that pinching target component W9 is not a pinching acceptable component. In the case that gripping acceptable area AA set in S22 (including gripping acceptable area AA which is thereafter scaled down in S28 above) is used in this determination, gripping acceptable area AA is used which is set for pinching target component W9. On the contrary to this, in the case that workpiece W10 is specified as a pinching target component (hereinafter, referred to as pinching target component W10), gripping center position PP of picking tool T2 when picking tool T2 pinches pinching target component W10 is situated inside gripping acceptable area AA. In this case, image processing device 80 determines that pinching target component W9 is a pinching acceptable component. In the case that gripping acceptable area AA set in S22 (including gripping acceptable area AA which is thereafter scaled down in S28 above) is used in this determination, gripping acceptable area AA is used which is set for pinching target component W10.

Then, if it is determined that workpiece W which is specified as the pinching target component in S16 above is not a pinching acceptable component (S32: NO), image processing device 80 executes a process in S38, which will be described later. On the contrary to this, if it is determined that workpiece W, which is specified as the pinching target component in S16 above, is a pinching acceptable component (S32: YES), image processing device 80 sets a target position and a target posture for picking tool T2, based on gripping center position PP of picking tool T2 as pinching workpiece W, and transforms those set target position and target posture into target positions of motors 51 to 55 through coordinate transformation (S34). Further, image processing device 80 transmits the coordinate transformed target position together with information indicating whether the fixing mode is selected to robot control device 70 (S36).

In moving picking tool T2 to the target position, as has been described above, robot control device 70 moves picking tool T2 to a position lying directly above workpiece W determined as the pinching acceptable component, and thereafter drives motors 51 to 55 so that picking tool T2 is lowered and raised back along the Z-axis direction (the up-down direction) from the position lying directly above workpiece W. However, if the fixing mode is not selected in setting, robot control device 70 rotates picking tool T2 so that operating directions of clamping claws C, being a part of picking tool T2, coincide with a direction suitable for pinching work piece W, at least until picking tool T2 is lowered to a height of wall section S lying nearest to workpiece W.

Next, image processing device 80 determines whether all workpieces W residing inside search area AS in captured image I are specified to be pinching target components (S38). If it is determined that all workpieces W are not specified to be pinching target components (S38: NO), image processing device 80 executes the processes from S16 above onward repeatedly. As a result, for example, in captured image I shown in Fig.7, extracted workpieces W1 to W8 are specified to be pinching target components. On the contrary to this, if it is determined that all workpieces W are specified to be pinching target components (S38: YES), image processing device 80 ends the image processing sequence.

A similar image processing sequence to the one that has been described heretofore is performed also when a supply device other than work supply device 12 shown in Fig.1 is installed on work bench 11, . However, in S12 described above, the search area stored in association with the supply device so installed is read out from HDD 83.

In addition, a similar image processing sequence to the one that has been described heretofore is performed also when picking tool T1 (i.e., the electromagnetic chuck) shown in Fig.2 is attached to robot 20, when picking tool T3 (i.e., the suction nozzle) shown in Fig.2 is attached to robot 20, or when a picking tool other than picking tools T1, T2, T3 is attached to robot 20. However, when the direction in which workpiece W is pinched cannot be specified as in the case that picking tool T1 or picking tool T3 is attached to robot 20, the gripping acceptable area set in S22 above remains constant irrespective of the posture of workpiece W that is specified to be a pinching target component.

Thus, as has been described in detail above, robot system 10 can move workpieces W from work supply device 12 to tray T in a stable manner.

Incidentally, in this embodiment, robot system 10 is an example of a component moving device. Workpiece supply device 12 is an example of a component supply section. Conveyor belt 13 is an example of a component supply surface. Arm 22 is an example of a moving section. Camera 24 is an example of an imaging section. Robot control device 70 is an example of a control section. Image processing device 80 is an example of a calculating section, a setting section, and a determining section. Input device 85 is an example of a switching section and an input section. Gripping acceptable area AA is an example of a pinching acceptable area. Straight line AA is an example of a boundary of the pinching acceptable area. Pair of clamping claws C, C is an example of a pair of claw sections. The pinching directions D1 to D3 of pinching target components W1 to W3 constitute an example of a direction in which the pair of claw sections pinches a pinching target component. The captured image is an example of an image. Picking tool T2 is an example of a holding tool. Workpiece W is an example of multiple components.

In addition, robot 20 may include a perpendicular articulated arm of any number of axes other than five axes in place of the five-axis perpendicular articulated arm or may include a horizontal articulated arm.

### Reference Signs List

10 Robotic system, 12 work supply device, 13 Conveyor belt, 22 Arm, 24 Camera, 70 Robot control device, 80 Image processing device, 85 Input device, AA gripping acceptable area, C, C Pair of clamping claws, D1-D3 Direction in which the pair of clamping claws pinches a pinching target component, F Offset amount, I Captured image, SW Wall surface, T2 Picking tool, W workpiece, W1-W3 Workpiece (Pinching target component), W10 workpiece (pinching acceptable component), θ angle

## Claims

1. A component moving device (10) comprising:
a component supply section (12) having a component supply surface (13) where multiple components (W) are placed in a scattered manner and a wall section (S) configured to prevent the components (W) from falling off the component supply surface (13);
a holding tool (T2) configured to pinch and hold individually the components (W) placed on the component supply surface (13) with a pair of claw sections (C);
a moving section (22) configured to move the holding tool (T2) to a position above one of the components (W) placed on the component supply surface (13) and then move the holding tool (T2) from above the one of the components in an up-down direction;
an imaging section (24) configured to image the component supply section (12) from above the component supply surface (13);
a calculating section (80) configured to calculate an angle (θ) at which a direction (D1-D3) in which the pair of claw sections (C) pinches a pinching target component (W1), which is a pinching target component (W1) to be pinched by the pair of claw sections (C), and an inner wall surface (SW) of the wall section (S) intersect based on an image imaged by the imaging section (24);
a setting section (80) configured to set a pinching acceptable area (AA), in which the components (W) placed on the component supply surface (13) can be individually pinched by the pair of claw sections (C) while the holding tool (T2) is avoiding an interference with the wall section (S), so as to be narrower as the angle (θ) calculated at the calculating section (80) becomes greater;
a determining section (80) configured to determine whether the pinching target component (W1-W3) is a pinching acceptable component, which can be pinched by the pair of claw sections (C) of the holding tool (T2) while the holding tool (T2) is avoiding an interference with the wall section (S), the determination being determined based on the pinching acceptable area (AA) set at the setting section (80) and the image; and
a control section (70) configured to control operations of the holding tool (T2) and the moving section (22) so that the holding tool (T2) pinches and holds the pinching target component (W1-W3) which is determined to be the pinching acceptable component at the determining section (80).

2. The component moving device according to claim 1, the component moving device further comprises an input section (85) configured to enable an input of an offset amount, of which amount being a distance from a boundary of the pinching acceptable area (AA),
wherein the setting section (80) sets the pinching acceptable area (AA) to be narrowed in accordance with the offset amount.

## Patentansprüche

1. Bauteil-Bewegungsvorrichtung (10), umfassend:
einen Bauteil-Zuführabschnitt (12) mit einer Bauteil-Zuführfläche (13), an der mehrere Bauteile (W) verstreut platziert sind, und einem Wandabschnitt (S), der konfiguriert ist zum Verhindern, dass die Bauteile (W) von der Bauteil-Zuführfläche (13) herunterfallen,
ein Haltewerkzeug (T2), das konfiguriert ist zum individuellen Klemmen und Halten der an der Bauelement-Zuführfläche (13) platzierten Bauteile (W) mittels eines Paars von Klauenabschnitten (C),
einen Bewegungsabschnitt (22), der konfiguriert ist zum Bewegen des Haltewerkzeugs (T2) zu einer Position über einem der auf der Bauteil-Zuführfläche (13) platzierten Bauteile (W) und dann zum Bewegen des Haltewerkzeugs (T2) von oberhalb des einen Bauteils in einer Oben-Unten-Richtung,
einen Bildaufnahmeabschnitt (24), der konfiguriert ist zum Aufnehmen eines Bilds des Bauteil-Zuführabschnitts (12) von oberhalb der Bauteil-Zuführfläche (13),
einen Berechnungsabschnitt (80), der konfiguriert ist zum Berechnen eines Winkels (θ), mit dem eine Richtung (D1-D3), in der das Paar von Klauenabschnitten (C) ein Klemmziel-Bauteil (W1), das ein durch das Paar von Klauenabschnitten (C) zu klemmendes Klemmziel-Bauteil (W1) ist, klemmen, und eine Innenwandfläche (SW) des Wandabschnitts (S) einander kreuzen, basierend auf einem durch den Bildaufnahmeabschnitt (24) aufgenommenen Bild,
einen Setzabschnitt (80), der konfiguriert ist zum derartigen Setzen eines klemmfähigen Bereichs (AA), in dem an der Bauteil-Zuführfläche (13) platzierte Bauteile individuell durch das Paar von Klauenabschnitten (C) geklemmt werden können, während das Haltewerkzeug (T2) eine Behinderung mit dem Wandabschnitt (S) vermeidet, dass dieser kleiner wird, wenn der an dem Berechnungsabschnitt (80) berechnete Winkel (θ) größer wird,
einen Bestimmungsabschnitt (80), der konfiguriert ist zum Bestimmen, ob das Klemmziel-Bauteil (W1-W3) ein klemmbares Bauteil ist, das durch das Paar von Klauenabschnitten (C) des Haltewerkzeugs (T2) geklemmt werden kann, während das Haltewerkzeug (T2) eine Behinderung mit dem Wandabschnitt (S) vermeidet, wobei die Bestimmung basierend auf dem an dem Setzabschnitt (80) gesetzten klemmfähigen Bereich (AA) und dem Bild bestimmt wird, und
einen Steuerabschnitt (70), der konfiguriert ist zum Steuern von Operationen des Haltewerkzeugs (T2) und des Bewegungsabschnitts (22), sodass das Haltewerkzeug (T2) das Klemmziel-Bauteil (W1-W3), das an dem Bestimmungsabschnitt (80) als ein klemmbares Bauteil bestimmt wird, klemmt und hält.

2. Bauteil-Bewegungsvorrichtung nach Anspruch 1, wobei die Bauteil-Bewegungsvorrichtung weiterhin einen Eingabeabschnitt (85) umfasst, der konfiguriert ist zum Ermöglichen einer Eingabe einer Versatzgröße, die eine Distanz von einer Grenze des klemmfähigen Bereichs (AA) ist, wobei der Setzabschnitt (80) den klemmfähigen Bereich (AA) derart setzt, dass er sich in Entsprechung zu der Versatzgröße verschmälert.

## Revendications

1. Dispositif de déplacement de composants (10) comprenant :
une section d'alimentation de composants (12) ayant une surface d'alimentation de composants (13) où de multiples composants (W) sont placés de manière dispersée, et une section de paroi (S) configurée pour empêcher les composants (W) de tomber de la surface d'alimentation de composants (13) ;
un outil de maintien (T2) configuré pour pincer et maintenir individuellement les composants (W) placés sur la surface d'alimentation de composants (13) avec une paire de sections de griffe (C) ;
une section de déplacement (22) configurée pour déplacer l'outil de maintien (T2) vers une position au-dessus de l'un des composants (W) placé sur la surface d'alimentation de composants (13), et ensuite pour déplacer l'outil de maintien (T2) depuis le dessus de l'un des composants dans une direction haut-bas ;
une section d'imagerie (24) configurée pour imager la section d'alimentation de composants (12) depuis le dessus de la surface d'alimentation de composants (13) ;
une section de calcul (80) configurée pour calculer un angle (θ) auquel une direction (D1-D3) dans laquelle la paire de sections de griffe (C) pince un composant cible de pincement (W1), qui est un composant cible de pincement (W1) devant être pincé par la paire de sections de griffe (C), et une surface de paroi interne (SW) de la section de paroi (S) s'intersectent sur la base d'une image imagée par la section d'imagerie (24) ;
une section de réglage (80) configurée pour régler une zone acceptable pour le pincement (AA), dans lequel les composants (W) placés sur la surface d'alimentation de composants (13) peuvent être pincés individuellement par la paire de sections de griffe (C) tandis que l'outil de maintien (T2) évite une interférence avec la section de paroi (S), de manière à ce qu'elle soit plus étroite lorsque l'angle (θ) calculé par la section de calcul (80) devient plus grand ;
une section de détermination (80) configurée pour déterminer si le composant cible de pincement (W1-W3) est ou non un composant acceptable pour le pincement, qui peut être pincé par la paire de sections de griffe (C) de l'outil de maintien (T2) tandis que l'outil de maintien (T2) évite une interférence avec la section de paroi (S), la détermination étant déterminée sur la base de la zone acceptable pour le pincement (AA) réglée par la section de réglage (80) et de l'image ; et
une section de contrôle (70) configurée pour contrôler les opérations de l'outil de maintien (T2) et de la section de déplacement (22) de telle sorte que l'outil de maintien (T2) pince et maintient le composant cible de pincement (W1-W3) qui est déterminé comme étant le composant acceptable pour le pincement par la section de détermination (80).

2. Dispositif de déplacement de composants selon la revendication 1, le dispositif de déplacement de composants comprenant en outre une section d'entrée (85) configurée pour permettre une entrée d'une quantité de décalage, dont la quantité est une distance depuis une délimitation de la zone acceptable pour le pincement (AA),
dans lequel la section de réglage (80) règle la zone acceptable pour le pincement (AA) à rétrécir conformément à la quantité de décalage.
